(19) Europäisches Patentamt / European Patent Office / Office européen des brevets

(11) **EP 4 697 011 A1**

(12) **DEMANDE DE BREVET EUROPEEN**

(43) Date de publication:
**18.02.2026 Bulletin 2026/08**

(21) Numéro de dépôt: **25193767.8**

(22) Date de dépôt: **04.08.2025**

(51) Classification Internationale des Brevets (IPC):
**G01N 19/04** (2006.01)   **G01N 29/24** (2006.01)

(52) Classification Coopérative des Brevets (CPC):
**G01N 19/04; G01N 29/2418;** G01N 2203/0055;
G01N 2291/0231

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **13.08.2024 FR 2408900**

(71) Demandeur: **Commissariat à l'Energie Atomique
et aux Energies
Alternatives
75015 Paris (FR)**

(72) Inventeurs:
• **Duchateau, Guillaume
33600 PESSAC (FR)**
• **Pradel, Pierre
33470 LE TEICH (FR)**
• **Hébert, David
33800 Bordeaux (FR)**
• **Malaise, Frédéric
33125 HOSTENS (FR)**

(74) Mandataire: **Hautier IP
20, rue de la Liberté
06000 Nice (FR)**

(54) **PROCÉDÉ ET BANC DE TEST D'ADHÉRENCE DE L'INTERFACE ENTRE DEUX MATÉRIAUX**

(57) L'invention consiste en un procédé de test d'adhérence d'une interface (21) entre au moins une première (11) et une deuxième (12) couche d'un empilement (10), la deuxième couche définissant avec la première couche une première interface (21), l'empilement comprenant en outre une couche d'ablation (13), la couche d'ablation et la première couche étant disposées de sorte à former une deuxième interface (22), le procédé comprenant l'application d'au moins une impulsion laser (100a) sur la couche d'ablation par un laser (100), la réalisation d'une observation de la deuxième couche par un dispositif d'observation (200) de sorte à détecter la création d'une zone de vide (300) entre la première couche et la deuxième couche et en déduire un seuil de rupture entre la première couche et la deuxième couche.

FIG. 2B

**Description**

## DOMAINE TECHNIQUE

La présente invention concerne un procédé de test d'adhérence de deux matériaux. Elle trouve pour application particulièrement avantageuse la réalisation d'un test d'adhérence d'une interface entre deux couches d'un empilement, plus particulièrement d'un empilement comprenant plusieurs couches.

## ETAT DE LA TECHNIQUE

Lorsque deux matériaux, identiques ou de nature différente, sont assemblés, il peut être d'intérêt de vérifier la bonne tenue mécanique de l'assemblage dans l'environnement où il sera utilisé, voire de déterminer le seuil de rupture de la zone d'adhérence dite interface.

Il existe plusieurs techniques afin de tester cette adhérence entre deux couches de matériaux d'un assemblage. En général, le procédé peut reposer sur l'utilisation d'une impulsion laser relativement intense focalisée sur une face de l'assemblage. Ce procédé laser se dénomme LASAT pour Laser Shock Adhesion Test en langue anglaise signifiant essai d'adhérence par choc laser.

L'impulsion laser focalisée à la surface de la cible génère un plasma dense à haute température. Il initie alors une onde de compression, suivie d'une onde de détente, qui se propage dans l'assemblage. Lorsque l'onde de compression arrive sur la face arrière libre de l'assemblage, elle est réfléchie en onde de traction. Le croisement de l'onde de traction avec l'onde de détente incidente donnera lieu à une traction maximale dans une certaine zone. La connaissance des dimensions et caractéristiques mécaniques des matériaux, et le réglage des paramètres laser permet de localiser ce maximum de traction au voisinage de l'interface testée. Si l'amplitude de l'onde de traction est supérieure au seuil de rupture mécanique de l'interface, les deux matériaux se dissocient, on teste ainsi l'adhérence. Cette technique est illustrée en Figure 1 et est décrite dans le brevet FR2681427A1. Une observation de la face arrière libre de l'assemblage permet d'observer la rupture d'adhérence. Cependant cette solution repose sur divers réglages complexes de l'impulsion laser, de nombreux essais sont alors nécessaires.

Cette méthode peut être optimisée avec l'utilisation d'une seconde impulsion laser. De la même façon, chacune des impulsions génèrera des ondes de tractions. Cependant cette solution implique de réaliser des calculs complexes de chronométrie d'onde afin de contrôler la localisation du maximum de traction dans la région de l'interface. De plus, plusieurs paramètres influencent les résultats, ce qui est source d'incertitude.

Un objet de la présente invention est donc de proposer une solution permettant d'améliorer la réalisation d'un test d'adhérence de l'interface entre deux couches. Un autre objet, est de proposer une solution pour rendre plus simple l'évaluation du seuil de rupture de l'interface entre deux couches.

## RESUME

Pour atteindre cet objectif, selon un mode de réalisation on prévoit un procédé de test d'adhérence d'une première interface entre au moins une première et une deuxième couches d'un empilement, la première couche présentant une face avant et une face arrière opposée à la face avant de la première couche, la deuxième couche présentant une face avant définissant avec la face arrière de la première couche la première interface, l'empilement comprenant en outre une couche additionnelle dite couche d'ablation, de préférence métallique, présentant une face avant et une face arrière opposée à la face avant de la couche d'ablation et disposée sur la face avant de la première couche de sorte à former une deuxième interface, le procédé comprenant les étapes suivantes :

- appliquer au moins une impulsion laser par, et de préférence sur, la face avant de la couche d'ablation par un laser,
- réaliser une observation d'une face arrière de la deuxième couche, opposée à la face avant de la deuxième couche, par un dispositif d'observation de sorte à détecter la création d'une zone de vide entre la première couche et la deuxième couche et en déduire un seuil de rupture de la première interface,

le matériau de la couche d'ablation étant choisi de sorte à avoir une impédance acoustique $Z_{13}$ inférieure à une impédance acoustique $Z_{11}$ du matériau de la première couche, l'impulsion laser, un rapport $Z_{13}/Z_{11}$ et une épaisseur $E_{13}$ de la couche d'ablation étant configurés de sorte que l'impulsion laser appliquée sur la face avant de la couche d'ablation par un laser génère :

- une première onde de compression se propageant depuis la face avant de la couche d'ablation jusqu'à la deuxième interface au sein de la couche d'ablation,
- une première onde de compression réfléchie se propageant au sein de la couche d'ablation depuis la deuxième interface et jusqu'à la face avant de la couche d'ablation et résultant de la réflexion de la première onde de compression sur la deuxième interface,
- une première onde de traction se propageant au sein de la couche d'ablation depuis la face avant de la couche d'ablation et jusqu'à la deuxième interface et résultant de la réflexion de la première onde de compression réfléchie sur la première face de la couche d'ablation,
- une onde, dite onde fille de traction résultant de la transmission de la première onde de traction, l'onde fille de traction se propageant au sein de la première couche depuis la deuxième interface jusqu'à la première interface, l'onde fille de traction étant configurée de sorte à générer un effort de traction à la première interface, créant la zone de vide entre la première et la deuxième couche lorsque l'amplitude de l'impulsion laser dépasse un seuil dit de rupture $Sr_{100a}$,

- une onde fille transmise se propageant au sein de la deuxième couche depuis la première interface jusqu'à la face arrière de la deuxième couche et résultant de la transmission de l'onde fille de traction de la première interface, tout au moins avant création de la zone de vide.

Ainsi, en observant la face arrière de la deuxième couche, il est possible de détecter à partir de quelle amplitude ou de quelle densité d'énergie de l'impulsion laser l'onde parvenant en face arrière disparaît ou est fortement atténuée, témoignant de la création d'une zone de vide au niveau de la première interface. Il est alors possible d'en déduire aisément s'il y a eu rupture de l'adhérence ou non. De plus, il est également possible, avec la connaissance de paramètres matériaux de lier la vitesse induite de la face arrière et donc de déterminer le seuil de rupture de cette première interface.

Ainsi, l'invention propose une solution afin d'améliorer la méthode de réalisation de test d'adhérence d'une interface entre deux couches. Elle propose additionnellement une solution afin d'évaluer le seuil de rupture de l'interface entre deux couches. La présence de la couche d'ablation permet dans un premier temps de générer une onde de compression qui sera réfléchie en une nouvelle onde de compression au niveau de la deuxième interface. La nouvelle onde de compression pourra ensuite se réfléchir totalement au niveau de la face avant de la couche d'ablation. La réflexion totale entraine la création d'une onde de traction qui se propagera dans la couche d'ablation jusqu'à l'interface entre la première et la deuxième couche de sorte à créer une rupture. La couche d'ablation peut alors permettre de générer directement une onde de traction de grande amplitude. La rupture d'adhérence pourra ensuite être observée à l'arrière de l'empilement. De manière additionnelle, le seuil de rupture pourra être également mesuré à l'arrière de l'empilement. Cette solution propose ainsi une simplification par la génération directe et contrôlée d'une onde de traction. On évite ainsi les calculs complexes de chronométrie simplifiant le test d'adhérence et de façon séparée et additionnelle la méthode d'évaluation du seuil de rupture. Par ailleurs, on limite les réglages divers et complexes de l'impulsion laser limitant alors les incertitudes. De plus, de par la séparation de l'amplitude de l'onde de traction pour générer la rupture et de l'amplitude des ondes de compression, l'observation de la rupture en est facilitée De manière optionnelle, la mesure du seuil de rupture en est facilitée. On limite notamment la présence de bruit lors de l'observation permettant d'améliorer la précision.

Selon un autre aspect on un banc de test d'adhérence d'une première interface configuré de sorte à mettre en oeuvre le procédé de test et comprenant, de préférence selon une direction de propagation, au moins une source laser configurée pour délivrer l'au moins une impulsion laser, ledit empilement comprenant la couche d'ablation et ledit dispositif d'observation.

Ainsi, le banc de test permet d'observer et de tester de manière simple et précise l'adhérence et par extension le seuil de rupture entre la première et la deuxième couche de l'empilement facilement.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 représente un procédé de test d'adhérence selon une méthode de l'art antérieur.
Les figures 2A et 2B représente le présent procédé de test d'adhérence d'une interface entre deux couches d'un empilement.
La figure 3 représente le profil de l'amplitude des ondes dans le temps et en fonction de leurs positions dans l'empilement tel qu'obtenu par une simulation numérique.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. Par exemple, les directions des ondes sont schématisées et ne représentent pas la propagation exacte.

## DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, la couche d'ablation et la première couche sont en contact au niveau de la deuxième interface. Ainsi, il n'y a pas de matériau entre la couche d'ablation et la première couche.

Selon un exemple, la première couche et la deuxième couche sont en contact au niveau de la première interface. Ainsi, il n'y a pas de matériau entre la première et la deuxième couche.

Selon un exemple, la face avant de la couche d'ablation est disposée au contact de l'air ou d'un matériau présentant une impédance acoustique $Z_m$ inférieure à l'impédance acoustique $Z_{13}$ du matériau de la couche d'ablation. Ainsi, cela permet de créer un confinement et ainsi de générer une onde de compression de plus grande amplitude, puis d'avoir la création d'une onde de traction de plus grande amplitude.

Selon un exemple, le matériau de la couche d'ablation est pris parmi de l'aluminium, de l'argent, du cuivre ou de l'or.

Selon un exemple, l'application de l'impulsion laser est configurée de sorte à ce que l'impulsion laser applique une pression initiale sur la face avant de la couche d'ablation supérieure à 1 GPa. Ainsi l'impulsion laser est suffisante pour tester l'adhérence entre la première couche et la deuxième couche.

Selon un exemple, l'application de l'impulsion laser est configurée de sorte à ce que l'impulsion laser présente une densité d'énergie supérieure ou égale à 1 $J/cm^2$, de préférence supérieure ou égale à 5 $J/cm^2$, de préférence supérieure ou égale à 10 $J/cm^2$. Ainsi, l'impulsion est suffisante pour entrainer la création de la zone de vide.

Selon un exemple, l'application de l'impulsion laser est configurée de sorte que l'impulsion laser présente une durée t, la couche d'ablation (13) présente une vitesse du son (c), et dans lequel l'épaisseur $E_{13}$ de la couche d'ablation est configurée de sorte que le rapport $E_{13}/(2*c*t)$ est strictement supérieur à 1. De préférence, $E_{13}/(2*c*t) > 2$. De préférence, de préférence $E_{13}/(2*c*t) > 5$. De préférence, $E_{13}/(2*c*t) > 10$, où c, est la vitesse du son dans la couche d'ablation. L'épaisseur de la couche d'ablation est ainsi suffisante pour permettre de séparer temporellement la première onde de compression de la première onde de traction.

Selon un exemple, la durée d'application de l'impulsion laser est supérieure à 1 nanoseconde. Ainsi cela permet de générer une onde qui, d'une part s'atténuera relativement peu au cours de sa propagation et, d'autre part, laissera suffisamment de temps à l'interface pour réagir à la sollicitation et éventuellement rompre.

Selon un exemple, l'impulsion laser présente une longueur d'onde supérieure à 250 nanomètres, de préférence supérieure à 500 nanomètres, de préférence égale à 1000 nanomètres. Cela permet de générer l'absorption nécessaire au niveau de la couche d'ablation. Ainsi cela permet de générer une onde présentant une amplitude suffisante pour tester l'adhérence entre la première et la deuxième couche de l'empilement au niveau de la première interface.

Selon un exemple, la couche d'ablation est déposée sur la première couche par une méthode prise parmi :

- une pulvérisation cathodique,
- un dépôt chimique en phase vapeur assisté par plasma.

Cela permet ainsi d'avoir une épaisseur de deuxième interface entre la couche d'ablation et la première couche que l'on peut négliger.

Selon un exemple, la direction de propagation est sensiblement perpendiculaire à un plan formé par la deuxième interface.

Selon un exemple, la première interface et la deuxième interface définissent des plans parallèles.

Selon un exemple, la première interface et la face avant de la couche d'ablation définissent des plans parallèles.

Selon un exemple, l'observation de la face arrière de la deuxième couche est réalisée à l'aide d'un vélocimètre. Cela permet, en connaissant les propriétés mécaniques des matériaux de lier vitesse de la face arrière et contrainte. Ainsi, on peut observer la dynamique de l'onde de traction au niveau de la face arrière de la deuxième couche, si celle-ci s'annule alors il y a eu rupture entre la première couche et la deuxième couche.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

En revanche, lorsqu'il est indiqué qu'une première couche est au contact d'une deuxième couche, cela signifie qu'il n'y a pas d'autre couche entre cette première et deuxième couche, hormis une éventuelle couche de colle. Cette couche de colle présente de préférence une épaisseur du même ordre de grandeur que la rugosité de la première et/ou de la deuxième couche. De préférence, cette couche de colle présente une épaisseur inférieure ou égale à 10 $\mu$m (micronmètres).

Une couche peut par ailleurs être composée de plusieurs sous-couches d'un même matériau ou de matériaux différents.

Dans la description qui suit, sauf indication contraire, lorsque l'on fait référence à des qualificatifs de position absolue, tels que les termes "avant", "arrière", il est fait référence à la direction de propagation du laser incident sur l'empilement.

Une couche présente habituellement deux faces opposées et parallèles. Sauf contreindication, l'épaisseur d'une couche est mesurée selon une perpendiculaire à ses faces.

Dans la description qui suit, l'unité GPa (GigaPascal) correspond à $10^9$ Pa (Pascal), correspondant également à $10^9$ kg*m$^{-1}$*s$^{-2}$.

Dans la description qui suit, l'unité J (Joule) correspond à kg*m$^2$*s$^{-2}$.

Dans la présente description, le terme seuil de rupture peut s'entendre comme une valeur de sollicitation mécanique au-delà de laquelle, deux couches peuvent se dissocier entièrement ou au moins localement.

La valeur du seuil de rupture peut s'exprimer en Pascal. Il pourra alors être spécifié une tension de rupture pour atteindre ce seuil de rupture.

Dans la présente description, le terme seuil de rupture peut s'entendre également comme le seuil de l'amplitude de l'impulsion laser, implicitement associé au seuil de rupture mécanique de l'interface. La valeur correspondant à la fluence laser serait alors exprimée en unité d'énergie par unité de surface. Les deux définitions de seuil de rupture pouvant être reliées l'une à l'autre.

Dans la présente description, les amplitudes des ondes correspondent aux contraintes transmises. Ainsi une contrainte présentant une amplitude positive correspond à une onde en compression et une contrainte présentant une amplitude négative correspond à une onde en traction. L'évaluation des portions transmise (T) et/réfléchie (R) d'une onde sur l'interface entre deux matériaux d'impédance $Z_1$ et $Z_2$ s'évaluent mathématiquement en se fondant sur des calculs hydrodynamiques : $T = 2Z_2/(Z_1+Z_2)$ et $R = (Z_2-Z_1)/(Z_1+Z_2)$.

Dans la présente description, il pourra être fait une comparaison entre les amplitudes des ondes de tractions et de compression ainsi qu'en termes de seuil, les valeurs des amplitudes/seuils seront considérées comme étant exprimées en valeurs absolues.

Dans la présente description, appliquer une impulsion par une face signifie que le laser atteint cette face soit directement, soit en passant par une couche additionnelle disposée sur cette face.

Dans la présente description, appliquer une impulsion sur une face signifie que le laser atteint cette face directement sur cette face.

La présente invention concerne un procédé de test d'adhérence d'une première interface 21 entre au moins une première couche 11 et une deuxième couche 12 d'un empilement 10. L'empilement 10 comprend en outre une couche additionnelle dite d'ablation 13. Le procédé comprend au moins une étape d'application d'au moins une impulsion laser 100a sur la couche d'ablation 13 par un laser 100. L'impulsion laser 100a peut alors permettre de créer au moins une onde de compression suivie d'une onde de traction dans l'empilement 10. Plus précisément, ladite onde de compression va se propager dans la couche d'ablation 13 puis une portion, dite portion réfléchie, de celle-ci va se réfléchir au niveau d'une deuxième interface 22. La deuxième interface 22 étant positionné entre la couche d'ablation 13 et la première couche 11. Ladite portion réfléchie de ladite onde de compression va ensuite se réfléchir au niveau d'une face avant 13a de la couche d'ablation 13. La face avant 13a de la couche d'ablation 13 étant préférentiellement au contact de l'air. La portion réfléchie de l'onde de compression est réfléchie totalement en une première onde de traction. Cette onde de traction pourra alors se propager dans l'empilement 10 jusqu'à la première interface 21. Si l'amplitude de l'impulsion laser incidente dépasse un seuil dit de rupture $Sr_{100a}$, alors l'amplitude

de l'onde de traction sera suffisante pour entrainer la création d'une zone de vide 300 au niveau de la première interface 21. La zone de vide 300 peut s'étendre au moins en partie au niveau de la première interface 21. De préférence, la zone de vide 300 s'étend sur toute la première interface 21. La zone de vide 300 pourra être créée de façon invariante dans le plan transverse sur la totalité de la première interface 21. On pourra alors observer une rupture d'adhérence entre la première 11 et la deuxième couche 12. Aussi, le procédé comprend également au moins une étape d'observation de la deuxième couche 12 par un dispositif d'observation 200. Plus précisément, à partir de l'observation d'une face arrière 12b de la deuxième couche 12, il est possible de détecter à partir de quelle amplitude ou de quelle puissance du laser 100 l'onde parvenant en face arrière 12b disparaît ou est fortement atténuée, témoignant de la création de la zone de vide 300 au niveau de la première interface 21, traduisant ainsi une rupture d'adhérence.

Additionnellement, on pourra également déduire aisément le seuil de rupture de cette première interface 21. Déduire le seuil de rupture d'une interface entre deux couches à partir de l'observation de la face arrière de l'empilement, par exemple par un vélocimètre, est largement connu de l'art antérieur. On pourra par exemple se référer à la publication suivante [S. Bardy et al, Optics & Laser Technology 124, 105983 (2020)]. De manière plus globale, le principe général est le suivant. Le vélocimètre permet de mesurer la vitesse de la face 12b induite par l'onde mécanique. Cette vitesse est proportionnelle à la vitesse de déplacement de la matière au niveau de la face, avec un facteur proche de deux. La vitesse matière s'estime en utilisant les relations de Rankine-Hugoniot ou en effectuant des simulations numériques avec un code d'hydrodynamique. Ces estimations reposent sur une connaissance des paramètres mécaniques du matériau considéré incluant la vitesse du son et le module de cisaillement.

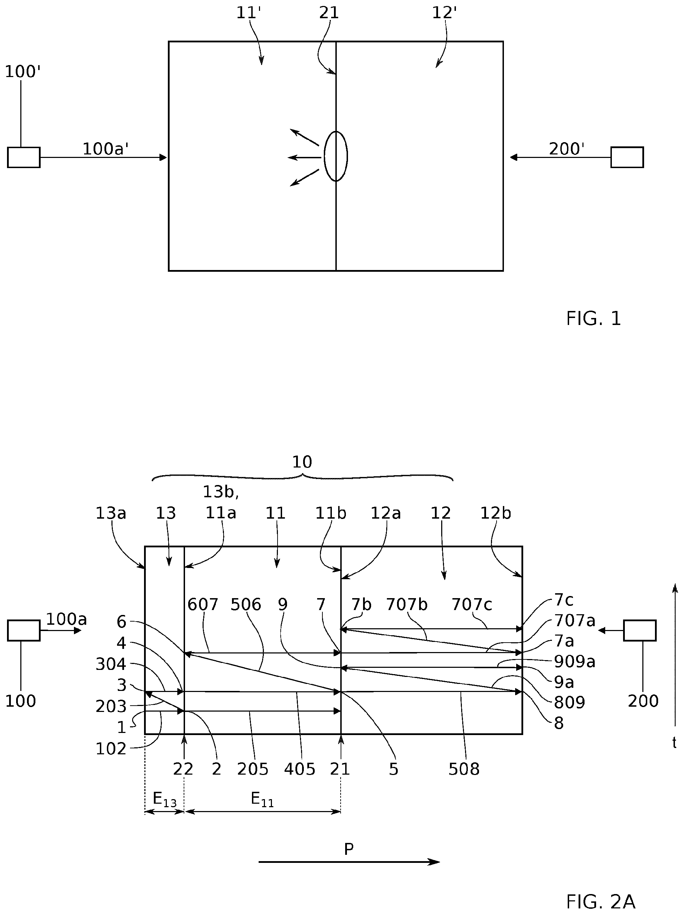

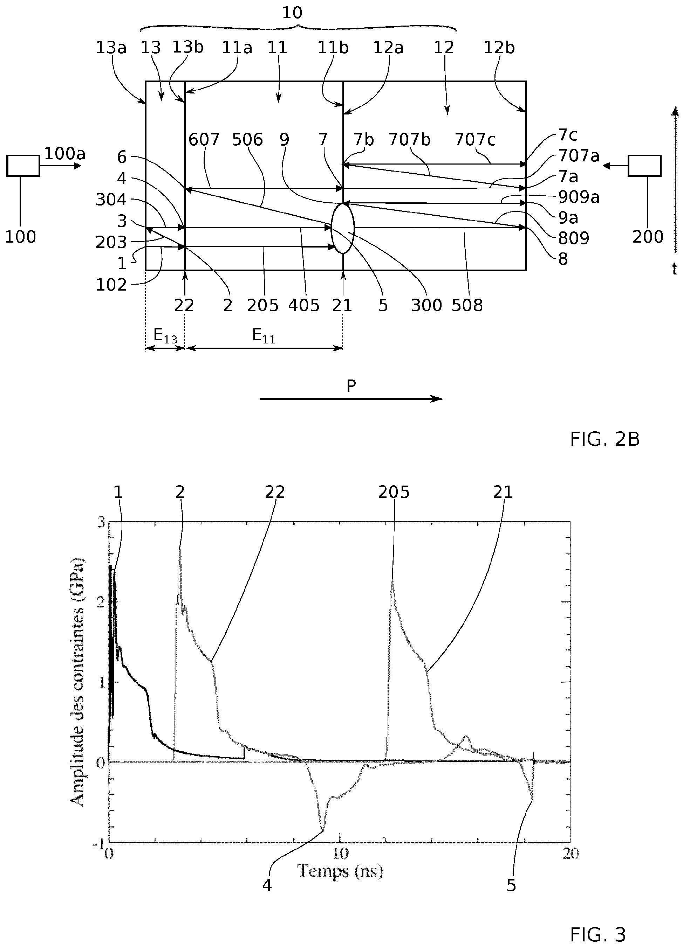

L'empilement 10 et ses propriétés vont maintenant être décrits en référence aux figures 2A et 2B. Chaque couche de l'empilement 10 va également être décrite suivant une direction de propagation P. La direction de propagation P peut par exemple correspondre à la direction incidente de l'impulsion laser 100a sur l'empilement 10. Ainsi, la direction de propagation P peut, selon un exemple, correspondre à la direction allant d'un laser 100 jusqu'à un dispositif d'observation 200.

L'empilement 10 comprend ainsi, suivant la direction de propagation P, la couche d'ablation 13, la première couche 11 et la deuxième couche 12. L'ensemble comprenant la première couche 11 et la deuxième couche 12 peut alors être définit comme un assemblage. L'assemblage peut être considéré comme l'élément pour lequel le test d'adhérence souhaite être réalisé.

La couche d'ablation 13 présente une face avant 13a. La face avant 13a peut être configurée de sorte à recevoir l'impulsion laser 100a. La couche d'ablation 13 présente également une face arrière 13b. La face arrière 13b de la couche d'ablation 13 étant opposée à la face avant 13a de la couche d'ablation 13. La couche d'ablation 13 présente une épaisseur $E_{13}$. L'épaisseur $E_{13}$ de la couche d'ablation 13 peut correspondre à la distance entre la face avant 13a et la face arrière 13b de la couche d'ablation 13. De préférence, les faces avant 13a et arrière 13b de la couche d'ablation 13 sont parallèles. L'épaisseur $E_{13}$ est mesurée perpendiculairement à ces faces.

L'empilement 10 comprend ensuite, suivant la direction de propagation P, la première couche 11. La première couche 11 présente une face avant 11a. La face arrière 13b de la couche d'ablation 13 étant disposée sur la face avant 11a de la première couche 11, de préférence au contact de cette dernière. Ainsi une interface, dite deuxième interface 22, est formée par la face arrière 13b de la couche d'ablation 13 et la face avant 11a de la première couche 11.

Selon un exemple, la couche d'ablation 13 et la première couche 11 sont en contact au niveau de la deuxième interface 22. Ainsi, il n'y a pas de matériaux entre la couche d'ablation 13 et la première couche 11. Pour ce faire et selon un exemple, la couche d'ablation 13 peut être déposée sur la première couche 11 par une méthode prise parmi une pulvérisation cathodique ou un dépôt chimique en phase vapeur assisté par plasma. Ainsi l'épaisseur de deuxième interface 22 entre la couche d'ablation 13 et la première couche 11 peut être négligée.

La première couche 11 présente également une face arrière 11b. La face arrière 11b de la première couche 11 étant opposée à la face avant 11a de la première couche 11. Ainsi, la première couche 11 peut présenter une épaisseur $E_{11}$. L'épaisseur $E_{11}$ de première couche 11 peut alors s'étendre entre la face avant 11a et la face arrière 11b de la première couche 11. L'épaisseur $E_{13}$ de la couche d'ablation 13 peut être inférieure à l'épaisseur $E_{41}$ de première couche 11.

L'empilement comprend ensuite, suivant la direction de propagation P, la deuxième couche 12. La deuxième couche 12 présente une face avant 12a. La face arrière 11b de la première couche 11 étant disposée sur la face avant 12a de la deuxième couche 12. Ainsi une interface, dite première interface 21, est formée par la face arrière 11b de la première couche 11 et la face avant 12a de la deuxième couche 12.

Selon un exemple, la première couche 11 et la deuxième couche 12 sont en contact au niveau de la première interface 21. Ainsi, il n'y a pas de matériau entre la première couche 11 et la deuxième couche 12. Une éventuelle couche de colle peut selon un exemple être positionnée entre la première couche 11 et la deuxième couche 12. Cette couche de colle présente de préférence une épaisseur du même ordre de grandeur que la rugosité de la première 11 et/ou de la deuxième 12 couche. Ainsi, elle peut être, par exemple, inférieur ou égale à 10 μm.

La deuxième couche 12 présente également une face arrière 12b. La face arrière 12b de la deuxième couche 12 étant opposée à la face avant 12a de la deuxième couche 12. La face arrière 12b est opposée à la face avant 13a de la couche d'ablation 13.

La couche d'ablation 13 est configurée de sorte que l'impulsion laser 100a appliquée sur la face avant 13a de la couche d'ablation 13 par un laser 100 génère au moins une onde de traction. La couche d'ablation 13 peut être configurée de sorte à permettre des allers-retours de l'impulsion laser 100a de sorte à créer une onde de traction. L'onde de traction étant alors configurée de sorte à créer la zone de vide 300.

Pour ce faire le matériau de la couche d'ablation 13 est choisi de sorte à avoir une impédance acoustique $Z_{13}$ inférieure à une impédance acoustique $Z_{11}$ du matériau de la première couche 11. Ainsi, l'onde de compression initiale induite par l'impulsion laser 100a sera réfléchie sur la face arrière 13b en onde de compression dans la couche d'ablation 13. Plus précisément, cela permet de garder l'onde de compression avec une amplitude suffisante pour générer une onde de traction (après réflexion sur la face avant 13a) ayant à son tour une amplitude suffisante pour entrainer une rupture au niveau de la première interface 21. On entend ici par amplitude suffisante une amplitude (en valeur absolue) supérieure au seuil de rupture. De préférence, les paramètres vérifient l'équation ci-dessous, avec R le coefficient de réflexion pour la deuxième interface 22 et $a_i$ l'amplitude maximale initiale de l'onde.

$$\frac{2Z_{11}(Z_{11} - Z_{13})}{(Z_{13} + Z_{11})^2} a_i > R$$

Selon un exemple, la couche d'ablation 13 est configurée de sorte à absorber l'énergie de l'impulsion laser 100a. La couche d'ablation 13 peut être en un matériau absorbant. La couche d'ablation 13 est préférentiellement métallique. Cela permet ainsi d'absorber efficacement l'impulsion laser, et de générer une onde de compression initiale créée par l'impulsion laser 100a dans l'empilement 10. Selon un exemple, le matériau de la couche d'ablation est pris parmi de l'aluminium, de l'argent, du cuivre ou de l'or. Ainsi, l'efficacité d'absorption par la couche d'ablation 13 peut être augmentée.

Le procédé comprend une étape d'application d'au moins une impulsion laser 100a sur la face avant 13a de la couche d'ablation 13 par un laser 100. L'étape d'application peut correspondre à une étape d'irradiation.

L'impulsion laser 100a, le rapport $Z_{13}/Z_{11}$ et l'épaisseur $E_{13}$ de la couche d'ablation 13 sont configurés de sorte que l'impulsion laser 100a focalisée sur la face avant 13a de la couche d'ablation 13 par un laser 100 génère des ondes mécaniques qui vont être décrites dans la suite de la description en référence aux figures 2A à 3. Les figures 2A et 2B illustrent l'empilement 10 pour lequel on souhaite tester l'adhérence de deux matériaux, ou de deux couches 11, 12 d'un assemblage et illustre la dynamique des ondes mécaniques de compression et de traction induites initialement par l'impulsion laser 100a. Les figures 2A et 2B comprennent également une dimension temporelle t. L'axe temporel t peut illustrer la dynamique dans le temps des ondes mécaniques induites initialement par l'impulsion laser 100a.

Dans la suite de la description, il sera fait référence à des zones. Ces zones s'entendent comme étant des zones d'une face et présentant une surface dans le plan transverse à la direction de propagation. Cette surface pourra être égale à toute la surface de la face correspondante.

Selon un exemple, l'impulsion laser 100a sera focalisée sur la face avant 13a de la couche d'ablation au niveau d'une zone source 1. La surface de la zone source 1 peut être égale à la surface de la face 13a. L'impulsion laser 100a peut alors être paramétrée de sorte à entrainer la création de la zone de vide 300 et donc une rupture entre la première couche 11 et la deuxième couche 12.

Selon un exemple, l'application de l'impulsion laser 100a est configurée de sorte à appliquer une pression initiale sur la face avant 13a de la couche d'ablation 13. La couche d'ablation 13 peut absorber l'impulsion laser 100a. Cette absorption peut alors entrainer une augmentation significative de la température au voisinage de la face avant 13a de la couche d'ablation 13. Ainsi, un gradient de pression peut être généré et entrainer des contraintes mécaniques. La connaissance théorique et numérique du profil de pression induit par l'impulsion laser 100a pourra permettre de mieux quantifier les résultats. Selon un exemple, un code de simulation numérique, peut donner l'estimation de la pression d'ablation de certains matériaux.

Plus précisément, l'impulsion laser 100a peut entrainer l'application d'une pression supérieure à 1 GPa (Gigapascal). Ainsi l'impulsion laser 100a est suffisante pour tester l'adhérence entre la première couche 11 et la deuxième couche 12. Ainsi, l'impulsion laser 100a est configurée de sorte à appliquer une contrainte sur la face avant 13a de la couche d'ablation 13 et à présenter une amplitude supérieure à 1 GPa. Le profil de l'impulsion laser 100a au niveau de la zone source 1 est illustré en figure 3.

Selon un exemple, l'impulsion laser 100a peut présenter une longueur d'onde $\lambda$. De préférence, la longueur d'onde $\lambda$ de l'impulsion laser 100a peut alors être supérieure à 250 nanomètres. De préférence, la longueur d'onde $\lambda$ de l'impulsion laser 100a peut alors être supérieure à 500 nanomètres. De préférence la longueur d'onde $\lambda$ de l'impulsion laser 100a peut alors être égale à 1000 nanomètres. Cela permet de générer l'absorption nécessaire au niveau de la couche d'ablation 13. Ainsi cela permet de générer une onde présentant une amplitude suffisante pour tester l'adhérence entre la première 11 et la deuxième couche 12 de l'empilement 10.

Selon un exemple, l'application de l'impulsion laser 100a est configurée de sorte à présenter une densité d'énergie supérieure ou égale à 1 J/cm$^2$, de préférence supérieure ou égale à 5 J/cm$^2$, de préférence supérieure ou égale à 10 J/cm$^2$. Ainsi, l'impulsion laser 100a est suffisante pour entrainer la création de la zone de vide 300.

Selon un exemple, la durée t d'application de l'impulsion laser 100a est supérieure à 1 nanoseconde. Ainsi cela permet de générer une onde qui, d'une part s'atténuera relativement peu au cours de sa propagation et, d'autre part, laissera suffisamment de temps à la première interface 21 pour réagir à la sollicitation et éventuellement rompre.

Tout gradient de contraintes mécaniques se propage dans la matière, cette dynamique est décrite par les équations d'Euler auxquelles le comportement mécanique est ajouté. Les contraintes mécaniques générée par l'impulsion laser 100a au niveau de la zone source 1 constitue la source de l'ensemble des ondes mécaniques décrites dans les prochains points.

L'impulsion laser 100a va alors générer une première onde de compression 102. Cette première onde de compression 102 va se propager depuis la face avant 13a de la couche d'ablation 13 jusqu'à la deuxième interface 22, par exemple suivant la direction de propagation P, au sein de la couche d'ablation 13. Ainsi, la première onde de compression 102 se propage entre la zone source 1 et une zone 2 située sur la deuxième interface 22. Le profil de la première onde de compression 102 au niveau de la deuxième interface 22 et donc au niveau de la zone 2 est illustrée par la figure 3.

La couche d'ablation 13 et la première couche 11 ayant des impédances acoustiques différentes, la première onde de compression 102 peut être partiellement transmise 205 et réfléchie 203. Comme explicité précédemment, l'impédance acoustique $Z_{13}$ de la couche d'ablation 13 est inférieure à l'impédance acoustique $Z_{11}$ du matériau de la première couche 11. De ce fait, la portion transmises 205 de la première onde de compression 102 pourra être une onde de compression ayant une amplitude inférieure ou égale à l'amplitude de la première onde de compression 102. La portion réfléchie 203 pourra elle avoir une amplitude inférieure ou égale, à l'amplitude de la première onde de compression 102. Les coefficients de réflexion et de transmission dépendent du matériau utilisé. Ces coefficients sont régis par des concepts physiques connus.

La première onde de compression réfléchie 203 correspond à la portion réfléchie de la première onde de compression 102. Ainsi, la première onde de compression réfléchie 203 résulte de la réflexion de la première onde de compression 102 sur la deuxième interface 22. La première onde de compression réfléchie peut se propager au sein de la couche d'ablation 13 suivant une direction inverse à la direction de propagation P.

Ainsi, la première onde de compression réfléchie 203 se propage entre la zone 2 et une zone 3. La zone 3 étant positionnée sur la face avant 13a de la couche d'ablation 13. Selon un exemple, la face avant 13a de la couche d'ablation 13 est dite libre. Sous l'action d'une onde, cette face avant 13a de la couche d'ablation 13 peut alors se déplacer librement.

Selon un exemple, la face avant 13a de la couche d'ablation 13 est disposée au contact de l'air. En effet, l'empilement 10 est dans l'air dont la densité est significativement inférieure à celle des matériaux considérés. De manière similaire, l'impédance acoustique $Z_a$ de l'air est négligeable devant l'impédance acoustique $Z_{13}$ de la couche d'ablation 13. Dans ces conditions la première onde de compression réfléchie 203 arrivant au niveau de la zone 3 est de préférence totalement réfléchie en une onde conservant le même profil mais avec une amplitude opposée. Ainsi, la première onde de compression réfléchie 203 devient une première onde de traction 304.

Selon un exemple, la face avant 13a de la couche d'ablation 13 peut également être au contact d'un matériau. Le matériau pourra alors présenter une impédance acoustique $Z_m$ inférieure à l'impédance acoustique $Z_{13}$ du matériau de la couche d'ablation 13.

La première onde de traction 304 générée au niveau de la zone 3 résulte alors de la réflexion de la première onde de compression réfléchie 203 sur la première face 13a de la couche d'ablation 13. La première onde de traction 304 se propage de la première face 13a de la couche d'ablation 13 jusqu'à la première interface 21. La première onde de traction 304 peut se propager au sein de la couche d'ablation 13 suivant la direction de propagation P. La première onde de traction 304 se propage de la zone 3 jusqu'à une zone 4 positionnée sur la deuxième interface 22. Le profil de la première onde de traction 304 au niveau de la zone 4 de la deuxième interface 22 peut être observé sur la figure 3. La première onde de traction 304 au niveau de la deuxième interface 22 peut alors présenter une amplitude dite négative. La première onde de traction 304 peut alors présenter un profil similaire à la première onde de compression 102 mais de signe opposé. La première onde de traction 304 peut présenter une amplitude en valeur absolue inférieure à l'amplitude en valeur absolue de la première onde de compression 102.

Comme illustré en figure 3, au niveau de la deuxième interface 22 (zones 2 et 4) on peut observer deux ondes. On peut observer au niveau de la deuxième interface 22, la première onde de compression 102 et la première onde de traction 304. L'observation de ces deux ondes est possible car ces deux ondes arrivent à deux temps distincts au niveau de la deuxième interface 22. Pour ce faire, et selon un exemple, l'épaisseur $E_{13}$ de la couche d'ablation 13 peut être paramétrée en fonction de l'impulsion laser 100a. Ainsi, l'application de l'impulsion laser 100a peut présenter une durée t. La couche d'ablation 13 présente une vitesse du son c. L'épaisseur $E_{13}$ de la couche d'ablation 13 est choisie de sorte à être suffisante pour permettre de séparer temporellement la première onde de compression et la première onde de traction. L'épaisseur $E_{13}$ de la couche d'ablation 13 peut être configurée de sorte que le rapport $E_{13}/(2*c*t)$ est strictement supérieur à 1. De préférence, $E_{13}/(2*c*t) > 2$. De préférence, $E_{13}/(2*c*t) > 5$. De préférence, $E_{13}/(2*c*t) > 10$. La séparation temporelle permet d'éviter une superposition des deux ondes et donc une diminution et/ou une suppression de l'amplitude de la première onde de traction 304. La suppression de l'amplitude de la première onde de traction 304 au niveau de la deuxième interface 22 pourrait limiter une rupture au niveau de la première interface 21.

Au niveau de la zone 4, la première onde de traction 304 est en partie transmise et en partie réfléchie. La partie réfléchie de la première onde de traction 304, va continuer à faire des aller-retours dans la couche d'ablation 13, son amplitude décroit alors régulièrement et n'est pas regardée dans la présente invention. La partie transmise de la première onde de traction 304 pourra alors présenter le même profil que la première onde de traction 304. La partie transmise de la première onde de traction 304 est nommé ci-après onde fille 405 de traction.

Une onde fille 405 de traction se propage alors au sein de la première couche 11. Plus précisément, l'onde fille 405 de traction se propage entre la deuxième interface 22 et la première interface 21. L'onde fille 405 de traction résulte de la transmission de la première onde de traction 304. L'onde fille 405 de traction se propage, selon un exemple, jusqu'à une zone 5 de la première interface 21.

Comme illustré en figure 3, au niveau de la zone 5 et donc au niveau de la première interface 21 on peut observer une onde présentant deux composantes principales. La première composante peut alors être en compression et est issue de la première transmission 205 au niveau de la zone 2 provenant de la première onde de compression 102. La deuxième composante peut alors être en traction. Cette deuxième composante peut correspondre à l'onde fille 405 de traction et est issue de la deuxième transmission au niveau de la zone 4 provenant de la première onde de traction 304. L'observation de ces deux ondes est possible car ces deux ondes arrivent à deux temps distincts au niveau de la première interface 21. Comme explicité précédemment, la séparation temporelle, dû à l'épaisseur $E_{13}$ de la couche d'ablation 13, permet d'éviter une superposition des deux ondes. La superposition de l'amplitude de la portion transmise 205 de la première onde de compression 102 et de l'onde fille 405 de traction entrainerait une traction limitée au niveau de la première interface 21, limitant la probabilité d'apparition d'une zone de vide 300.

L'onde fille 405 de traction est donc configurée de sorte à créer la zone de vide 300 entre la première 11 et la deuxième 12 couche si son amplitude est suffisante. Selon un exemple, l'amplitude de l'onde fille 405 de traction sera suffisante lorsque l'amplitude de l'impulsion laser 100a dépasse un seuil dit de rupture $Sr_{100a}$.

Selon un exemple, l'onde fille 405 de traction pourra être en partie réfléchie 506 et en partie transmise 508. La partie réfléchie 506 ainsi que les ondes résultantes 607, 707a, 707b, 707c peuvent ne pas être observées s'il y a bien création de la zone de vide 300. Ainsi elles seront décrites plus bas dans la description. On s'intéresse dans les paragraphes suivants de la description à la partie transmise 508 de l'onde fille 405 de traction.

Une onde fille transmise 508 se propage au sein de la deuxième couche 12. L'onde fille transmise 508 se propage depuis la première interface 21 (zone 5) jusqu'à la face arrière 12b de la deuxième couche 12 (zone 8) de préférence suivant la direction de propagation P. L'onde fille transmise 508 résulte de la transmission de l'onde fille 405 de traction de la première interface 21. Tout au moins, l'onde fille transmise 508 correspond à la partie transmise de l'onde fille 405 de traction avant création de la zone de vide 300.

L'arrivée de l'onde fille transmise 508 sur la zone 8 peut alors entrainer un déplacement de la face arrière 12b de la deuxième couche 12. La face arrière 12b de la deuxième couche 12 est configurée pour se déformer sous l'effet de l'onde qui se propage dans l'empilement 10. La face arrière 12b de la deuxième couche 12 est configurée de sorte à permettre l'observation par le dispositif d'observation 200 de l'évolution de cette déformation. La création de la zone de vide 300 au niveau de la première interface 21 va atténuer ou interrompre cette déformation, permettant ainsi d'identifier qu'il y a eu rupture et par la suite permettre de déterminer le seuil de rupture de la première interface 21.

De ce fait, si l'amplitude de l'impulsion laser 100a n'a pas été suffisante, alors l'amplitude maximale en traction de l'onde fille 405 de traction arrivant sur la première interface 21 est inférieure au seuil de rupture mécanique de la première interface 21, l'onde fille 405 de traction est intégralement transmise. L'onde fille transmise 508 observée au niveau de la face arrière 12b de la deuxième couche 12 pourra présenter sensiblement le même profil que celui de la première onde de traction 304 observé au niveau de la deuxième interface 22. Selon cet exemple, il n'y a pas de rupture d'observée et donc il n'y a pas de création de zone de vide 300.

Si l'amplitude maximale en traction de l'onde fille 405 de traction arrivant sur la première interface 21 est supérieure au seuil de rupture mécanique de la première interface 21, l'onde fille 405 de traction ne sera pas intégralement transmise. L'onde fille transmise 508 observée au niveau de la face arrière 12b de la deuxième couche 12 présentera une amplitude nulle au moment de l'atteinte du seuil de rupture. Cet exemple est illustré à la figure 3. L'amplitude de l'onde fille 405 est alors suffisante pour entrainer la création d'une rupture de la première interface 21 et donc la création d'une zone de vide 300. La dernière valeur de contrainte, amplitude de l'onde de traction, transmise peut correspondre au seuil de rupture mécanique qui peut être relié au seuil de rupture $Sr_{100a}$ issue de l'impulsion laser 100a.

La figure 3 illustre un exemple pour lequel une rupture au niveau de la première interface 21 est observée. La figure 3 est une simulation numérique illustrant trois profils d'ondes respectivement visibles, au niveau de la face avant 13a de la couche d'ablation 13, au niveau de la deuxième interface 22 et au niveau de la première interface 21. Les différentes amplitudes observables correspondent à l'amplitude de l'onde de compression initiale induite par l'impulsion laser 100a au niveau de la zone 1, à la première onde de compression 102 au niveau de la zone 2, à l'onde de traction 304 au niveau de la zone 4, à la portion transmise 205 de la première onde de compression 102 et à l'onde fille 405 de traction. Ces courbes sont obtenues dans le cas où la couche d'ablation 13 est de l'aluminium présentant une épaisseur $E_{13}$ de 16 $\mu$m (micromètres). La première couche 11 et la deuxième couche 13 présentent une épaisseur de 100 $\mu$m. L'impulsion laser 100a est paramétrée de sorte à avoir une intensité de 10 GW/cm$^2$, une durée t de 1,6 ns (nanosecondes) et une longueur d'onde $\lambda$ de 1 $\mu$m. Une valeur seuil de rupture est fixée à 0,5 GPa (Gigapascal), l'onde fille 405 de traction est alors tronquée à cette même valeur suite à la formation de la zone de vide 300 au niveau de la première interface 21 signifiant la perte d'adhérence de l'assemblage.

D'autres ondes observables suivants les cas en références aux figures 2A et 2B sont décrites ci-après. La dynamique de ces ondes n'affecte pas le principe général décrit précédemment.

Selon un exemple et comme explicité précédemment, la partie réfléchie 506 ainsi que les ondes résultantes 607, 707a, 707b, 707c peuvent ne pas être observées s'il y a bien création de la zone de vide 300. En effet, s'il y a création de la zone de vide 300, la face arrière 11b de la première couche 11 peut devenir une surface libre. L'impact d'une onde sur une surface libre pouvant impliquer une réflexion totale la partie réfléchie 506 ainsi que les ondes résultantes ne peuvent être observées.

Selon un exemple, l'onde fille transmise 508 arrive sur la face arrière 12b de la deuxième couche 12 en une zone 8 et est alors totalement réfléchie 809. L'onde fille 508 est totalement réfléchie car la face arrière 12b de la deuxième couche 12 est une surface libre. Cette onde réfléchie 809 peut se propager alors au sein de la deuxième couche 12 en direction de la première interface 21, vers une zone 9. Les observations suivantes ne sont pas utiles dans le cas présent.

Par ailleurs, s'il n'y a pas eu rupture de la première interface 21, toutes les ondes secondaires 607, 707a, 707b, 707c et 909a issues des zones 6 et 9 pourront également être observées par le dispositif d'observation 200. Les ondes secondaires 607, 707a, 707b, 707c et 909a étant issues des réflexions et/ou transmissions au niveau de la deuxième interface 22 ou de la première interface 21 ou de la face arrière 12b de la deuxième couche 12. L'observation de ces ondes secondaires implique qu'il n'y a pas eu perte d'adhérence. Dans ce cas le seuil de rupture de l'interface n'est pas atteint et l'impulsion laser 100a n'est donc pas suffisante.

Selon un exemple, le procédé de test d'adhérence de la première interface 21 est réalisé par un banc de test. Le banc de test peut alors comprendre, de préférence selon la direction de propagation P, au moins une source laser 100. Cette source laser 100 permet de réaliser l'impulsion laser 100a. Le laser 100 peut par exemple permettre d'utiliser la technique LASAT. Le laser 100 peut être un laser de type Nd : Yag.

Le banc de test peut également comprendre, selon la direction de propagation P, l'empilement 10. L'empilement 10 comprend la couche d'ablation 13 et peut alors présenter la face avant 13a de la couche d'ablation 13 positionné au regard du laser 100.

Selon un exemple, le banc de test comprend enfin le dispositif d'observation 200. Le dispositif d'observation 200 peut être un dispositif utilisant une technique optique interférométrique mettant à profit l'effet Doppler.

Selon un exemple, l'observation de la face arrière 12b de la deuxième couche 12 est réalisée par un vélocimètre. Cela permet, en connaissant les propriétés mécaniques des matériaux de lier vitesse et contrainte. Ainsi, on peut observer la dynamique de l'onde fille 405 au niveau de la face arrière 12b de la deuxième couche 12. De ce fait, si celle-ci s'annule ou réduit rapidement et fortement alors il y a eu rupture entre la première couche 11 et la deuxième couche 12.

Au regard de la description qui précède, il apparaît clairement que le procédé et le banc de test décrit permettent de simplifier considérablement la détermination d'une rupture au niveau d'une interface. Ils permettent optionnellement une mesure d'un seuil de rupture entre couches. Ainsi, le test d'adhérence peut être une mesure d'un seuil de rupture entre deux couches. De manière analogue, le test d'adhérence peut être un test avec un seuil de rupture connu à l'avance et fixé, l'impulsion laser 100a est alors paramétrée pour atteindre ce seuil de rupture.

En particulier, il n'est pas nécessaire d'effectuer des calculs de chronométrie. Par ailleurs, le réglage de la durée de l'impulsion laser est considérablement simplifié.

L'invention n'est pas limitée aux modes de réalisations précédemment décrits et s'étend à tous les modes de réalisation couverts par l'invention.

**Revendications**

1. Procédé de test d'adhérence d'une première interface (21) entre au moins une première (11) et une deuxième (12) couches d'un empilement (10), la première couche (11) présentant une face avant (11a) et une face arrière (11b) opposée à la face avant (11a) de la première couche (11), la deuxième couche (12) présentant une face avant (12a) définissant avec la face arrière (11b) de la première couche (11) la première interface (21), l'empilement comprenant en outre une couche additionnelle dite couche d'ablation (13), de préférence métallique, présentant une face avant (13a) et une face arrière (13b) opposée à la face avant (13a) de la couche d'ablation (13), la face arrière (13b) de la couche d'ablation (13) étant disposée sur la face avant (11a) de la première couche (11) de sorte à former une deuxième interface (22), le procédé comprenant les étapes suivantes :

- appliquer au moins une impulsion laser (100a) par, et de préférence sur, la face avant (13a) de la couche d'ablation (13) par un laser (100),
- réaliser une observation d'une face arrière (12b) de la deuxième couche (12), opposée à la face avant (12a) de la deuxième couche (12), par un dispositif d'observation (200) de sorte à détecter la création d'une zone de vide (300) entre la première couche (11) et la deuxième couche (12) et en déduire un seuil de rupture de la première interface (21),

le matériau de la couche d'ablation (13) étant choisi de sorte à avoir une impédance acoustique $Z_{13}$ inférieure à une impédance acoustique $Z_{11}$ du matériau de la première couche (11), l'impulsion laser (100a), un rapport $Z_{13}/Z_{11}$ et une épaisseur $E_{13}$ de la couche d'ablation (13) étant configurés de sorte que l'impulsion laser (100a) appliquée sur la face avant (13a) de la couche d'ablation (13) par un laser (100) génère :

- une première onde de compression (102) se propageant depuis la face avant (13a) de la couche d'ablation (13) jusqu'à la deuxième interface (22) au sein de la couche d'ablation (13),
- une première onde de compression réfléchie (203) se propageant au sein de la couche d'ablation (13) depuis la deuxième interface (22) et jusqu'à la face avant (13a) de la couche d'ablation (13) et résultant de la réflexion de la première onde de compression (102) sur la deuxième interface (22),
- une première onde de traction (304) se propageant au sein de la couche d'ablation (13) depuis la face avant de la couche d'ablation et jusqu'à la deuxième interface (22) et résultant de la réflexion de la première onde de compression réfléchie (203) sur la première face (13a) de la couche d'ablation (13),
- une onde, dite onde fille (405) de traction, résultant de la transmission de la première onde de traction (304), l'onde fille (405) de traction se propageant au sein de la première couche (11) depuis la deuxième interface (22) jusqu'à la première interface (21), l'onde fille (405) de traction étant configurée de sorte à générer un effort de traction à la première interface (21), créant la zone de vide (300) entre la première (11) et la deuxième (12) couche lorsque l'amplitude de l'impulsion laser (100a) dépasse un seuil dit de rupture Sr100a,

• une onde fille transmise (508) se propageant au sein de la deuxième couche (12) depuis la première interface (21) jusqu'à la face arrière (12b) de la deuxième couche (12) et résultant de la transmission de l'onde fille (405) de traction de la première interface (21), tout au moins avant création de la zone de vide (300).

2. Procédé selon la revendication précédente dans lequel, la couche d'ablation (13) et la première couche (11) sont en contact au niveau de la deuxième interface (22).

3. Procédé selon l'une quelconque des revendications précédentes dans lequel, la première couche (11) et la deuxième couche (12) sont en contact au niveau de la première interface (21).

4. Procédé selon l'une quelconque des revendications précédentes dans lequel, la face avant (13a) de la couche d'ablation (13) est disposée au contact de l'air ou d'un matériau présentant une impédance acoustique $Z_m$ inférieure à l'impédance acoustique $Z_{13}$ du matériau de la couche d'ablation (13).

5. Procédé selon l'une quelconque des revendications précédentes dans lequel, le matériau de la couche d'ablation (13) est pris parmi de l'aluminium, de l'argent, du cuivre ou de l'or.

6. Procédé selon l'une quelconque des revendications précédentes dans lequel, l'application de l'impulsion laser (100a) est configurée de sorte à ce que l'impulsion laser applique une pression initiale sur la face avant (13a) de la couche d'ablation (13) supérieure à 1 GPa.

7. Procédé selon l'une quelconque des revendications précédentes dans lequel, l'application de l'impulsion laser (100a) est configurée de sorte à ce que l'impulsion laser présente une densité d'énergie supérieure ou égale à 1 J/cm$^2$, de préférence supérieure ou égale à 5 J/cm$^2$, de précédence supérieure ou égale à 10 J/cm$^2$.

8. Procédé selon l'une quelconque des revendications précédentes dans lequel, l'application de l'impulsion laser (100a) est configurée de sorte que l'impulsion laser présente une durée (t), la couche d'ablation (13) présente une vitesse du son (c), et dans lequel l'épaisseur $E_{13}$ de la couche d'ablation (13) est configurée de sorte que le rapport $E_{13}/(2*c*t)$ est strictement supérieur à 1, de préférence $E_{13}/(2*c*t) > 2$, de préférence $E_{13}/(2*c*t) > 5$, de préférence $E_{13}/(2*c*t) > 10$.

9. Procédé selon la revendication précédente dans lequel, la durée (t) d'application de l'impulsion laser (100a) est supérieure à 1 nanoseconde.

10. Procédé selon l'une quelconque des revendications précédentes dans lequel, l'impulsion laser (100a) présente une longueur d'onde ($\lambda$) supérieure à 250 nanomètres, de préférence supérieure à 500 nanomètres, de préférence égale à 1000 nanomètres.

11. Procédé selon l'une quelconque des revendications précédentes dans lequel la couche d'ablation (13) est déposée sur la première couche (11) par une méthode prise parmi :

   • une pulvérisation cathodique,
   • un dépôt chimique en phase vapeur assisté par plasma.

12. Procédé selon l'une quelconque des revendications précédentes dans lequel, l'observation de la face arrière (12b) de la deuxième couche (12) est réalisée à l'aide d'un vélocimètre.

13. Banc de test d'adhérence d'une première interface (21) configuré de sorte à mettre en oeuvre le procédé de test selon l'une quelconque des revendications précédentes et comprenant, de préférence selon une direction de propagation (P), au moins une source laser (100) configurée pour délivrer l'au moins une impulsion laser (100a), ledit empilement (10) comprenant la couche d'ablation (13) et ledit dispositif d'observation (200).

FIG. 1

FIG. 2A

FIG. 2B

FIG. 3

Europäisches
Patentamt

European
Patent Office

Office européen
des brevets

**RAPPORT DE RECHERCHE EUROPEENNE**

Numéro de la demande

EP 25 19 3767

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/355062 A1 (HOUSEN KEVIN R [US] ET AL) 10 décembre 2015 (2015-12-10) * alinéas [0012] - [0052]; figures 1-7 * ----- | 1-13 | INV. G01N19/04 G01N29/24 |
| X | US 2016/109343 A1 (BOSSI RICHARD HENRY [US] ET AL) 21 avril 2016 (2016-04-21) * alinéas [0041] - [0091]; figure 3 * ----- | 1-13 | |
| X | US 2016/131557 A1 (BOSSI RICHARD H [US] ET AL) 12 mai 2016 (2016-05-12) * alinéas [0028] - [0036]; figures 1-4 * ----- | 1-13 | |
| X | US 2008/212067 A1 (GUPTA VIJAY [US]) 4 septembre 2008 (2008-09-04) * alinéas [0052] - [0093]; figures 1-8 * ----- | 1-13 | |
| A | JP 2024 067973 A (UNIV CHUO) 17 mai 2024 (2024-05-17) * alinéas [0013] - [0039] * ----- | 1-13 | |
| A | US 2009/241656 A1 (JACQUEMIN JEAN PHILIPPE [FR]) 1 octobre 2009 (2009-10-01) * alinéas [0026] - [0027] * ----- | 1-13 | DOMAINES TECHNIQUES RECHERCHES (IPC) G01N |
| A | US 2013/192373 A1 (STEWART ALAN FRANK [US] ET AL) 1 août 2013 (2013-08-01) * alinéas [0053] - [0119] * ----- | 1-13 | |
| A | US 2015/128709 A1 (STEWART ALAN F [US] ET AL) 14 mai 2015 (2015-05-14) * alinéa [0032] * ----- | 1-13 | |
| A | US 2024/159655 A1 (DUCOUSSO MATHIEU LOÏC [FR] ET AL) 16 mai 2024 (2024-05-16) * alinéas [0005] - [0029] * ----- | 1-13 | |

Le présent rapport a été établi pour toutes les revendications

| Lieu de la recherche | Date d'achèvement de la recherche | Examinateur |
|---|---|---|
| La Haye | 6 janvier 2026 | Cantalapiedra, Igor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................................
& : membre de la même famille, document correspondant

EPO FORM 1503 03.82 (P04C02)

## EP 4 697 011 A1

### ANNEXE AU RAPPORT DE RECHERCHE EUROPEENNE
### RELATIF A LA DEMANDE DE BREVET EUROPEEN NO.

EP 25 19 3767

06-01-2026

| Document brevet cité au rapport de recherche | Date de publication | Membre(s) de la famille de brevet(s) | Date de publication |
|---|---|---|---|
| US 2015355062 A1 | 10-12-2015 | AUCUN | |
| US 2016109343 A1 | 21-04-2016 | AUCUN | |
| US 2016131557 A1 | 12-05-2016 | AUCUN | |
| US 2008212067 A1 | 04-09-2008 | US 2008212067 A1 | 04-09-2008 |
| | | WO 2006089257 A1 | 24-08-2006 |
| JP 2024067973 A | 17-05-2024 | AUCUN | |
| US 2009241656 A1 | 01-10-2009 | AU 2003274536 A1 | 07-06-2004 |
| | | CN 1711467 A | 21-12-2005 |
| | | EP 1563277 A1 | 17-08-2005 |
| | | JP 2006505773 A | 16-02-2006 |
| | | US 2009241656 A1 | 01-10-2009 |
| | | WO 2004042373 A1 | 21-05-2004 |
| US 2013192373 A1 | 01-08-2013 | EP 2623977 A2 | 07-08-2013 |
| | | EP 3220140 A1 | 20-09-2017 |
| | | US 2013192373 A1 | 01-08-2013 |
| US 2015128709 A1 | 14-05-2015 | EP 3069132 A1 | 21-09-2016 |
| | | US 2015128709 A1 | 14-05-2015 |
| | | WO 2015073137 A1 | 21-05-2015 |
| US 2024159655 A1 | 16-05-2024 | CN 116964446 A | 27-10-2023 |
| | | EP 4308916 A1 | 24-01-2024 |
| | | FR 3120553 A1 | 16-09-2022 |
| | | US 2024159655 A1 | 16-05-2024 |
| | | WO 2022195190 A1 | 22-09-2022 |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2681427 A1

**Littérature non-brevet citée dans la description**

- **S. BARDY et al.** *Optics & Laser Technology*, 2020, vol. 124, 105983